# EUROPEAN PATENT APPLICATION

(11) **EP 4 660 815 A1**
(43) Date of publication of application: **10.12.2025**
(21) Application number: 25176142.5
(22) Date of filing: 13.05.2025
(51) Int. Cl.: G06F 11/362, G06T 1/20, G06T 15/00, G06T 15/80

(54) **SELECTIVE PER-PIPELINE STATE OBJECT (PSO) SHADER VALIDATION**

(30) Priority: 07.06.2024 US 202463657386 P
(71) Applicant: Apple Inc., Cupertino, CA 95014 (US)
(72) Inventor: MARQUES, Guillaume, Cupertino, 95014 (US); RATAJEWSKI, Jacek G., Cupertino, 95014 (US); SEGOVIA AZAPIAN, Alejandro S., Cupertino, 95014 (US); VAN DER MEIDE, Matthijs L., Cupertino, 95014 (US); SOKOLNIKOV, Nikita M., Cupertino, 95014 (US); SZCZERBUK, Pawel, Cupertino, 95014 (US)
(74) Representative: Zacco Denmark A/S

(57) **Abstract**

According to some graphics processing frameworks, so-called "pipeline state objects" (or "PSOs") may be used to describe how a rendering pipeline will behave in each pipeline stage when rendering graphics (and/or performing compute pipeline operations). Often, during the development or debugging of a game or other type of application, developers may prefer to focus on validating only a specific subset of PSOs. However, current shader validation workflow designs may only be able to be enabled (or disabled) globally, i.e., across all shaders and PSOs, which is preventing these desired per-PSO shader validation workflows from being possible. In addition to improving performance, selective per-PSO shader validation techniques allow for even more demanding applications, e.g., applications that push device hardware to its limits, to still be able to benefit from selective validation of PSOs, e.g., PSOs that are currently being tested or suspected to be the cause of problems in an application.

## Description

### Background

This disclosure relates generally to the field of graphics processing. More particularly, but not by way of limitation, this disclosure relates to processing environments having at least one graphics processor, such as a graphics processing unit (GPU), for which the validation of shader programs executed by the GPU may be manually (or automatically) enabled or disabled, e.g., based on a set of rules or a user selection.

Computers, mobile devices, and other computing systems typically have at least one programmable processor, such as a central processing unit (CPU) and other programmable processors specialized for performing certain processes or functions (e.g., graphics processing). Examples of a programmable processor specialized to perform graphics processing operations include, but are not limited to, a GPU, a digital signal processor (DSP), a field programmable gate array (FPGA), and/or a CPU emulating a GPU. GPUs, in particular, comprise multiple execution cores (also referred to as shader cores) designed to execute the same instruction on parallel data streams, making them more effective than general-purpose processors for operations that process large blocks of data in parallel. For instance, a CPU functions as a host and hands-off specialized parallel tasks to the GPUs. Specifically, a CPU can execute an application stored in system memory that includes graphics data associated with a video frame. Rather than processing the graphics data, the CPU forwards the graphics data to the GPU for processing; thereby, freeing the CPU to perform other tasks concurrently with the GPU's processing of the graphics data.

### Summary

In one implementation, a method of implementing per-pipeline state object (PSO) shader validation is disclosed herein, comprising: defining at least a first PSO, wherein the first PSO comprises: at least a first shader program for execution on a graphics processing unit (GPU); and one or more PSO parameters, and wherein the first shader program comprises instrumentation code configured to perform at least one validation operation on the first shader program; and setting a value of a first PSO shader validation variable to one of: an enabled state that causes the at least one validation operation on the first shader program to be enabled; or a disabled state that causes the at least one validation operation on the first shader program to be disabled.

In some such implementations, the first PSO shader validation variable comprises a first PSO parameter of the one or more PSO parameters, and the value of the first PSO shader validation variable is set via one of the following methods: (a) a software program; or (b) an Application Programming Interface (API).

In other implementations, the first PSO shader validation variable comprises an environmental variable (EV), e.g., a variable that is defined in the scope of a running process.

In still other implementations, the method may further comprise setting a value of a second PSO shader validation variable to one of: an enabled state that causes the at least one validation operation on the first shader program to be enabled; or a disabled state that causes the at least one validation operation on the first shader program to be disabled. According to some such implementations: the first PSO shader validation variable comprises a first PSO parameter of the one or more PSO parameters, the second PSO shader validation variable comprises an environmental variable, and the value of the second PSO shader validation variable takes precedence over the value of the first PSO shader validation variable in setting the state of the at least one validation operation on the first shader program. According to some such implementation, setting the value of the second PSO shader validation variable does not require a recompilation of an application executing the first shader program.

According to some implementations, the first (or second) PSO shader validation variable may have a default value of either the enabled state or the disabled state.

According to some other implementations, the first PSO may further comprise a second shader program for execution on the GPU, wherein the second shader program comprises instrumentation code configured to perform at least one validation operation on the second shader program, wherein setting the value of a first PSO shader validation variable to the enabled state further causes the at least one validation operation on the second shader program to be enabled, and wherein setting the value of a first PSO shader validation variable to the disabled state that causes the at least one validation operation on the second shader program to be disabled. As may be appreciated, there may be any number of shader programs associated with a single PSO (e.g., three, four, five, or even more shader programs), and a first and/or second PSO shader validation variable may control whether or not validation operations on these shader programs are enabled or disabled.

According to some implementations, the instrumentation code that is configured to perform at least one validation operation on the first shader program may further comprise code configured to: (a) perform an out of bounds memory access check; (b) perform an incorrect textures type check; (c) check for a stack overflow error; (d) perform resource usage checks; (e) perform acceleration structure type checks; or (f) perform residency checks, etc.

In yet another implementation, each of the above described methods, and variations thereof, may be implemented as a series of computer executable instructions. Such instructions may be written in any one or more convenient programming language. Such instructions may be collected into engines and/or programs and stored in any media that is readable and executable by a computer system (e.g., having a display, one or more processors, memory, one or more GPUs, etc.) or other programmable control device.

### Brief Description of the Drawings

While certain implementations will be described in connection with the illustrative implementations shown herein, this disclosure is not limited to those implementations. On the contrary, all alternatives, modifications, and equivalents are included within the spirit and scope of this disclosure as defined by the claims. In the drawings, which are not to scale, the same reference numerals are used throughout the description and in the drawing figures for components and elements having the same structure, and primed reference numerals are used for components and elements having a similar function and construction to those components and elements having the same unprimed reference numerals.
FIG. 1 is a diagram of a graphics processing path where implementations of the present disclosure may operate.
FIG. 2 is a block diagram of a system where implementations of the present disclosure may operate.
FIG. 3 is a logic flow diagram illustrating rules for implementing per-PSO shader validation, according to at least one implementation of the present disclosure.
FIG. 4 is a flowchart illustrating a graphics processing operation for implementing per-PSO shader validation, according to implementations of the present disclosure.
FIG. 5 is a block diagram of a computing system where implementations of the present disclosure may operate.
FIG. 6 is a block diagram of an implementation of a software layer and architecture where implementations of the present disclosure may operate.
FIG. 7 is a block diagram of another implementation of a software layer and architecture where implementations of the present disclosure may operate.

### Detailed Description

As will be described in greater detail below, GPUs are able to process shaders using a rendering pipeline (and/or compute pipelines). According to some graphics processing frameworks, so-called "pipeline state objects" (or "PSOs") may also be used to describe how the rendering pipeline will behave in each pipeline stage when rendering graphics (and/or performing compute pipeline operations). The term "PSO," as used herein, refers to a pipeline state object that represents the settings used by a GPU to draw or dispatch information. A PSO may comprise various components, such as: bytecode for one or more shaders, a description of the pipeline stages, a listing of resource types available during execution of the pipeline, depth/stencil data for the render target being written to, and other flags or settings that may be needed to define how input data is interpreted and rendered by the hardware when submitting work to the GPU(s).

Pipeline states may be either programmable or fixed, e.g., by linking compiler shader code and setting variable values related to the pipeline stage. Often, during the development or debugging of a game or other type of application, developers may prefer to focus on validating only a specific subset of PSOs. However, current shader validation workflow designs may only be able to be enabled (or disabled) globally, i.e., across all shaders and PSOs, which is preventing these desired per-PSO shader validation workflows from being possible. In addition to improving performance, selective per-PSO shader validation allows more demanding applications that push device hardware to its limits to still be able to benefit from selective validation for PSOs that are suspected to be the cause of problems in a given application.

Naively enabling shader validation globally across an entire application increases the memory usage and may lead to out of memory errors before the problematic part of the game or application can even be reached. Further, as will be described in greater detail below, having more control over which pipelines will be validated is an effective way of reducing compilation time and performance overhead.

Thus, as will be appreciated, per-PSO shader validation techniques, such as those disclosed herein, will give developers more control over which shaders should contain validation checks at any particular time. These techniques will allow developers to selectively ignore issues that are not currently a priority during the development of a given game or application, selectively reduce the performance overhead of the validation layer, and even allow for lightweight validation of the subset of shaders that may be currently under development.

To perform per-PSO shader validation, this disclosure includes various example implementations that allow a developer to set a value of a PSO shader validation variable to an enabled state or a disabled state. In one implementation, a graphics API (e.g., OpenGL^{®}, Direct3D^{®}, or Metal^{®} (OPENGL is a registered trademark of Hewlett Packard Enterprise Development LP; DIRECT3D is a registered trademark of Microsoft Corporation; and METAL is a registered trademark of Apple Inc.)) allows a developer and/or application to individually (or globally) set PSO shader validation states. The graphics API may also allow a user to provide a default state for PSO shader validation, and then subsequently provide a list of PSOs to enable/disable validation for through the use of an environment variable (EV). Similarly, a user can both provide a list of PSOs to enable/disable through the EV and use the graphics API to enable/disable some others at the same time, which may then, for example, be grouped together as a superset of PSOs for which validation is enabled (or disabled).

In the event that the user provides conflicting enable/disable settings for a given PSO (e.g., enabling validation for the given PSO via a PSO descriptor property, but disabling validation via an EV), a warning may be emitted from the computing system, and, in some implementations, the value provided through the EV will take precedence over the value set via the PSO descriptor property. This is meant to allow users to manually override API settings (e.g., without having to rebuild an entire application).

In the following description, for purposes of explanation, numerous specific details are set forth in order to provide a thorough understanding of the inventive concept. As part of this description, some of this disclosure's drawings represent structures and devices in block diagram form in order to avoid obscuring the disclosed principles. In the interest of clarity, not all features of an actual implementation are described. Moreover, the language used in this disclosure has been principally selected for readability and instructional purposes, which language may not have been selected to delineate or circumscribe the inventive subject matter, resort to the claims being necessary to determine such inventive subject matter. Reference in this disclosure to "one implementation" or to "an implementation" means that a particular feature, structure, or characteristic described in connection with the implementation is included in at least one implementation of the disclosure, and multiple references to "one implementation" or "an implementation" should not be understood as necessarily all referring to the same implementation.

The terms "a," "an," and "the" are not intended to refer to a singular entity unless explicitly so defined, but instead are intended to include the general class of which a specific example may be used for illustration. The use of the terms "a" or "an" may therefore mean any number that is at least one, including "one," "one or more," "at least one," and "one or more than one." The term "or" means any of the alternatives and any combination of the alternatives, including all of the alternatives, unless the alternatives are explicitly indicated as mutually exclusive. The phrase "at least one of" when combined with a list of items, means a single item from the list or any combination of items in the list. The phrase does not require all of the listed items unless explicitly so defined.

As used herein, the term "kernel" in this disclosure refers to a computer program that is part of a core layer of an operating system (e.g., Mac OSX^{™}) typically associated with relatively higher or the highest security level. The "kernel" is able to perform certain tasks, such as managing hardware interaction (e.g., the use of hardware drivers) and handling interrupts for the operating system. To prevent application programs or other processes within a user space from interfering with the "kernel," the code for the "kernel" is typically loaded into a separate and protected area of memory. Within this context, the term "kernel" may be interchangeable throughout this disclosure with the term "operating system kernel."

The disclosure also uses the term "compute kernel," which has a different meaning and should not be confused with the term "kernel" or "operating system kernel." In particular, the term "compute kernel" refers to a program for a graphics processor (e.g., GPU, DSP, or FPGA). In the context of graphics processing operations, programs for a graphics processor are classified as a "compute kernel" or a "shader." The term "compute kernel" refers to a program for a graphics processor that performs general compute operations (e.g., compute commands), and the term "shader" refers to a program for a graphics processor that performs graphics operations (e.g., render commands).

As used herein, the term "command" in this disclosure refers to a graphics API command encoded within a data structure, such as a pipeline state object, command buffer, or command list. The term "command" can refer to a render command (e.g., for draw calls) and/or a compute command (e.g., for dispatch calls) that a graphics processor is able to execute.

For the purposes of this disclosure, the term "processor" refers to a programmable hardware device that is able to process data from one or more data sources, such as memory. One type of "processor" is a general-purpose processor (e.g., a CPU) that is not customized to perform specific operations (e.g., processes, calculations, functions, or tasks), and instead is built to perform general compute operations. Other types of "processors" are specialized processor customized to perform specific operations (e.g., processes, calculations, functions, or tasks). Non-limiting examples of specialized processors include GPUs, floating-point processing units (FPUs), DSPs, FPGAs, application-specific integrated circuits (ASICs), and embedded processors (e.g., universal serial bus (USB) controllers).

As used herein, the term "graphics processor" refers to a specialized processor for performing graphics processing operations. Examples of "graphics processors" include, but are not limited to, a GPU, DSPs, FPGAs, and/or a CPU emulating a GPU. In one or more implementations, graphics processors are also able to perform non-specialized operations that a general-purpose processor is able to perform. As previously presented, examples of these general compute operations are compute commands associated with compute kernels.

As used herein, the term "resource" refers to an allocation of memory space for storing data that is accessible to a graphics processor, such as a GPU, based on a graphics API. For the purpose of this disclosure, the term "resource" is synonymous and can also be referenced as "graphics API resource." Examples of graphics API resources include buffers and textures. Buffers represent an allocation of unformatted memory that can contain data, such as vertex, shader, and compute state data. Textures represents an allocation of memory for storing formatted image data. The term "resource group" refers to a data structure that contains a list of resources that are logically grouped together for an interim time period. In one implementation, the resource group is an immutable list of resources where a resource cannot be added to or removed from the resource group once an application creates the resource group.

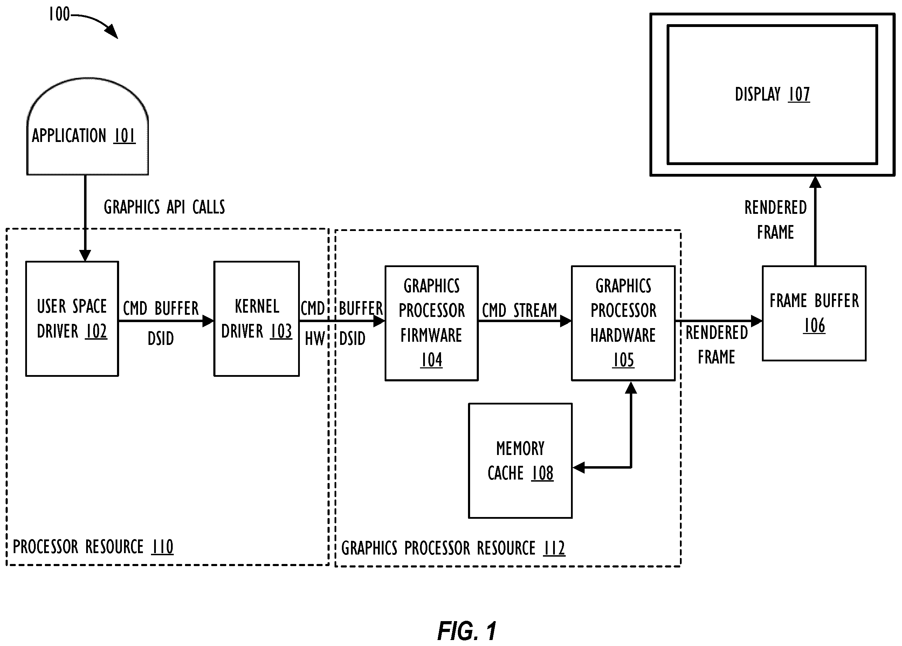

FIG. 1 is a diagram of a graphics processing path 100 where implementations of the present disclosure may operate. FIG. 1 illustrates an example in which the graphics processing path 100 utilizes a processor resource 110 and a graphics processor resource 112. The processor resource 110 includes one or more general-purpose processors (e.g., CPUs), where each processor has one or more cores. The processor resource 110 can also contain and/or communicate with memory, microcontrollers, and/or any other hardware resources a processor may utilize to process commands for graphics processor resource 112 to execute. The graphics processor resource 112 includes one or more graphics processors (e.g., GPUs), where each graphics processor has one or more execution cores and other computing logic for performing graphics and/or general compute operations. Stated another way, the graphics processor resource 112 may also encompass and/or communicate with memory (e.g., memory cache 108), and/or other hardware resources to execute programs, such as shaders or compute kernels. For example, graphics processor resource 112 is able to process shaders with a rendering pipeline and compute kernels with a compute pipeline.

FIG. 1 illustrates that application 101 generates graphics API calls for the purpose of encoding commands for the graphics processor resource 112 to execute. To generate the graphics API calls, application 101 includes code written with a graphics API. The graphics API (e.g., Metal^{®}) represents a published and/or standardized graphics library and framework that define functions and/or other operations that application 101 is able to have with a graphics processor. For example, the graphics API allows application 101 to be able to control the organization, processing, and submission of render and compute commands, as well as the management of associated data and resources for those commands.

In one or more implementations, application 101 is a graphics application that invokes the graphics API to convey a description of a graphics scene. Specifically, the user space driver 102 receives graphics API calls from application 101 and maps the graphics API calls to operations understood and executable by the graphics processor resource 112. For example, the user space driver 102 can translate the API calls into commands encoded within command buffers before being transferred to kernel driver 103. The translation operation may involve the user space driver 102 compiling shaders and/or compute kernels into commands executable by the graphics processor resource 112. As an example, the kernel driver 103 may perform memory allocation and scheduling of the command buffers to be sent to the graphics processor resource 112. For the purpose of this disclosure and to facilitate ease of description and explanation, unless otherwise specified, the user space driver 102 and the kernel driver 103 are collectively referred to as a graphics driver.

FIG. 1 illustrates that the graphics processor firmware 104 obtains command buffers that processor resource 110 commits for execution. The graphics processor firmware 104 can perform a variety of operations to manage the graphics processor hardware 105 that includes powering up the graphics processor hardware 105 and/or scheduling the order of commands that the graphics processor hardware 105 receives for execution. With reference to FIG. 1 as an example, the graphics processor firmware 104 can be implemented by a microcontroller that executes the graphics processor firmware 104. Specifically, the microcontroller could be embedded in the same package as a graphics processor within the graphic processor resource 112 and setup to pre-process commands for the graphics processor. In other implementations, the microcontroller is physically separated from the graphics processor.

After scheduling the commands, in FIG. 1, the graphics processor firmware 104 sends command streams to the graphics processor hardware 105. The graphics processor hardware 105 then executes the commands within the command streams according to the order the graphics processor hardware 105 receives the commands. The graphics processor hardware 105 includes multiple (e.g., numerous) execution cores, and thus, can execute a number of received commands in parallel. The graphics processor hardware 105 then outputs rendered frames to frame buffer 106. In one implementation, the frame buffer 106 is a portion of memory, such as a memory buffer, which contains a bitmap that drives display 107. Display 107 subsequently accesses the frame buffer 106 and converts (e.g., using a display controller) the rendered frame (e.g., bitmap) to a video signal for display.

Although FIG. 1 illustrates a specific implementation of graphics processing path 100, the disclosure is not limited to the specific implementation illustrated in FIG. 1. For instance, graphics processing path 100 may include other frameworks, APIs, and/or application layer services not specifically shown in FIG. 1. As an example, application 101 may have access to a graphics rendering and animation infrastructure to animate views and/or user interfaces for application 101. FIG. 1 also does not illustrate all of the hardware resources and/or components that graphics processing path 100 may utilize (e.g., power management units or memory resources, such as system memory). Additionally, or alternatively, even though FIG. 1 illustrates that processor resource 110 and graphics processor resource 112 are separate devices, other implementations could have the processor resource 110 and graphics processor resource 112 integrated on a single device (e.g., a system-on-chip). The use and discussion of FIG. 1 is only an example to facilitate ease of description and explanation.

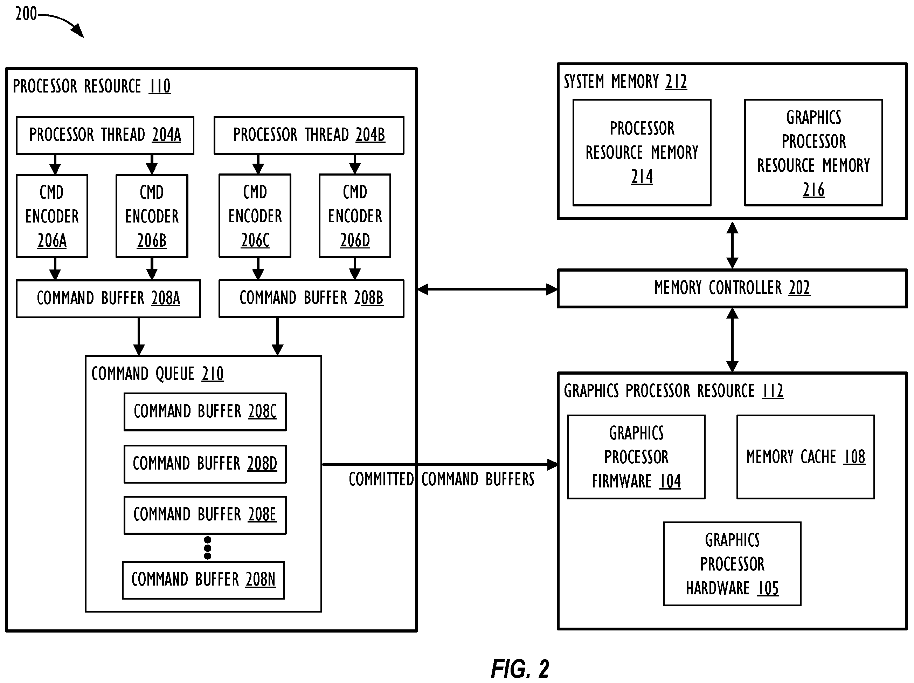

FIG. 2 is a block diagram of a system 200 where implementations of the present disclosure may operate. Specifically, system 200 is able to implement the graphics processing path 100 shown in FIG. 1. FIG. 2 illustrates that system 200 includes a processor resource 110 and a graphics processor resource 112. FIG. 2 illustrates processor threads 204A and 204B. Processor thread 204A is tasked with utilizing command encoders 206A and 206B and processor thread 204B is tasked with utilizing command encoder 206C and 206D. The command encoders 206A and 206B encode commands within command buffer 208A and command encoders 206C and 206D encode commands within command buffer 208B. A different number of processor threads and command encoders can be included in other implementations compared to two processor threads and four command encoders shown in the example of FIG. 2. The command encoders 206A-206D represent encoders that encodes commands into command buffers 208A and 208B for the graphics processor resource 112 to execute. Examples of command encoder types include, but are not limited to, Blit command encoders (e.g., graphics API resource copy and graphics API resource synchronization commands), compute command encoders (e.g., compute commands), and render command encoders (e.g., render commands).

Command buffers 208A and 208B, which are also referred to as "command lists," represent data structures that store a sequence of encoded commands for graphics processor resource 112 to execute. When one or more graphics API calls present and commit command buffers 208A and 208B to a graphics driver (e.g., the user space driver 102 shown FIG. 1), the processor resource 110 organizes the command buffers 208A and 208B into a command queue 210. The command queue 210 organizes the order in which command buffers 208 are sent to graphics processor resource 112 for execution. Using FIG. 2 as an example, command queue 210 contains command buffers 208C-208N, where command buffer 208C is at the top of the command queue 210 and is the next command buffer 208C to be sent to graphics processor resource 112 for execution. When processor resource 110 commits command buffers 208A and 208B for execution, the processor resource 110 is unable to encode any additional commands into command buffers 208A and 208B. After committing a command buffer 208, the command buffer becomes available to the graphics processor resource 112 for execution.

The example of FIG. 2 also illustrates that processor resource 110 and graphics processor resource 112 bilaterally communicate with a memory controller 202. The memory controller 202 manages the flow of information to and from system memory 212 and is sometimes tasked with maintaining system memory 212 itself (e.g., refresh or other functionality depending upon the type of memory). As shown in FIG. 2, a single memory controller 202 performs memory control for both the processor resource 110 and graphics processor resource 112. In another implementation, the memory controller 202 includes separate memory controllers, one memory control for processor resource 110 and another memory controller for graphics processor resource 112. The memory controller 202 bilaterally communicates with system memory 212, which may be divided into processor resource memory 214 and graphics processor resource memory 216. Some implementations of system memory 212 use physically or logically independent memory for each of the processor resource 110 and graphics processor resource 112, while other implementations call for sharing system memory 212 on a physical or logical basis.

Having a graphics API that supports setting per-PSO shader validation variables could also provide performance and power benefits. In particular, disabling the instrumentation code around certain shaders could reduce the amount of processing resources required during execution of a given game or application. As mentioned above, as used herein, instrumentation code refers to code that is configured to perform at least one validation operation on the first shader program, such as to: (a) perform an out of bounds memory access check; or (b) perform an incorrect textures type check; (c) check for a stack overflow error; (d) perform resource usage checks; (e) perform acceleration structure type checks; or (f) perform residency checks, etc. While instrumentation code may be valuable in detecting logical errors and/or debugging code, it also consumes additional processing and thermal resources to compile and execute such instrumentation code-and may result in severely reduced frame rates-especially in games and application that have a very large number of shader programs executing concurrently. The reduced frame rates when enabling shader validation may also make it more difficult for developers to reproduce incorrect behavior with shader validation enabled. For example, if a bug occurs only under some circumstances or takes a relatively long time to reproduce, the reduced performance from shader validation may make it impractical to use the tool to help resolve the bug.

As may now be appreciated, having the graphics processor reduce the number of validation operations executed to validate shader behavior reduces the bandwidth usage for running the application. An overall reduction in bandwidth usage translates to increases in performance and reduces power consumption. Consumption of less power also produces less heat from system 200. In one implementation, system 200 is subject to thermal mitigation operations that reduce frequencies and power to system 200. By doing so, the thermal mitigation operations cause system 200 to enter a reduced performance state.

Although FIG. 2 illustrates a specific implementation of a system 200 to perform per-PSO shader validation, the disclosure is not limited to the specific implementation illustrated in FIG. 2. For instance, even though FIG. 2 illustrates a single command queue 210; persons of ordinary skill in the art are aware that command buffers 208 can be placed into other command queues 210 not shown in FIG. 2. As another example, in other implementations, rather than being set at the per-PSO level, shader validation could also be enabled or disabled at the per-command buffer level (or even per-command queue level), if so desired. The use and discussion of FIG. 2 is only an example to facilitate ease of description and explanation.

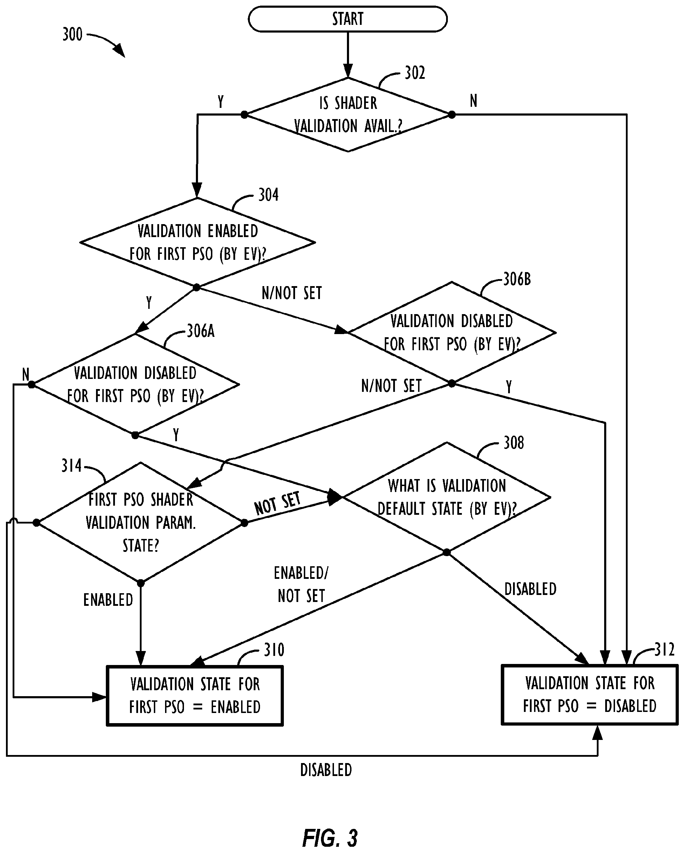

FIG. 3 depicts a logic flow diagram 300 illustrating rules for implementing per-PSO shader validation, according to at least one implementation of the present disclosure. In one implementation, logic flow diagram 300 may start at block 302, wherein it is determined if the performance of shader validation is an available and enabled option in the current system. If shader validation is not available (i.e., "N" at block 302), the operation may proceed to block 312, wherein the validation state for a hypothetical first PSO (which will be used in the discussion of FIG. 3) is set to a disabled state. If, instead, shader validation is an available option in the current system (i.e., "Y" at block 302), the operation may proceed to block 304, wherein the remainder of the logical rules for implementing per-PSO shader validation may be evaluated.

At block 304, a first check may be made as to whether shader validation has been enabled for the first PSO via the setting of an environmental variable (EV), e.g., via a pipeline label in a graphics API, via a command queue label, or via a shader validation globally unique identifier (GUID) that uniquely identifies the first PSO, etc. If shader validation has been enabled for the first PSO via EV (i.e., "Y" at block 304), the operation may proceed to block 306A, wherein it is checked as to whether shader validation may have also been disabled for the first PSO via EV (i.e., creating a conflicting status, wherein an EV has been used to both enable and disable shader validation for a given PSO). If shader validation for the first PSO has not also been disabled via EV (i.e., "N" at block 306A), then the operation may proceed to block 310, wherein the validation state for the first PSO is set to an enabled state. If, instead, shader validation for the first PSO has also been disabled via EV (i.e., "Y" at block 306A), then the operation may proceed to block 308, to allow any potentially-set default validation state values control the situation (i.e., due to the conflicting status set by EVs).

If, instead, shader validation has not been enabled (or simply has not been set at all) for the first PSO via EV (i.e., "N/NOT SET" at block 304), the operation may proceed to block 306B. At block 306B, if shader validation for the first PSO has been disabled via EV (i.e., "Y" at block 306B), then the operation may proceed directly to block 312, wherein the validation state for the first PSO is set to the disabled state. If, instead, at block 306B, shader validation for the first PSO has not been disabled via EV (or simply has not been set at all) (i.e., "N/NOT SET" at block 306B), then the operation may proceed to block 314, wherein it is checked if a first PSO shader validation parameter has been set, e.g., by a developer via an API call, EV, compiler hint, or other software interface (e.g., a checkbox or other property interface that is accessible to a developer in a visual development environment and that may be used to directly enable or disable validation for a given PSO(s)).

Turning now to block 314, the operation may proceed to assess the state of a relevant first PSO shader validation variable(s), i.e., a PSO parameter indicating whether or not a developer has indicated a desire to enable or disable shader validation for the first PSO. (Note: In some implementations, the state of the first PSO shader validation variable may actually be set by a developer before first creating the first PSO.) If, at block 314, it is ascertained that the first PSO shader validation variable has an enabled state (i.e., "ENABLED" at block 314), then the operation may proceed to block 310, wherein the validation state for the first PSO is set to an enabled state. If, instead, it is ascertained that the first PSO shader validation variable has a disabled state (i.e., "DISABLED" at block 314), then the operation may proceed to block 312, wherein the validation state for the first PSO is set to the disabled state. If, instead, it is ascertained that the first PSO shader validation variable has not yet been set (i.e., "NOT SET" at block 314), then the operation may proceed to block 308, to allow any potentially-set default validation state values control the situation (i.e., due to no validation status being set for the first PSO by EV or by shader validation variable).

At block 308, the operation may check whether there is a default validation state that has been set in the application (e.g., via an EV). If the default validation state has been set to be enabled by default for all PSOs (or has not been explicitly set) (i.e., "ENABLED/NOT SET" at 308), then the operation may proceed to block 310, wherein the validation state for the first PSO is set to the enabled state. If, instead, the default validation state has been explicitly set to be disabled by default for all PSOs (i.e., "DISABLED" at 308), then the operation may proceed to block 312, wherein the validation state for the first PSO is set to the disabled state. According to some implementations, if a developer sets a different shader validation default state value somewhere in the middle of the application, then all PSOs that follow that updated state value will adapt to the newly-set state.

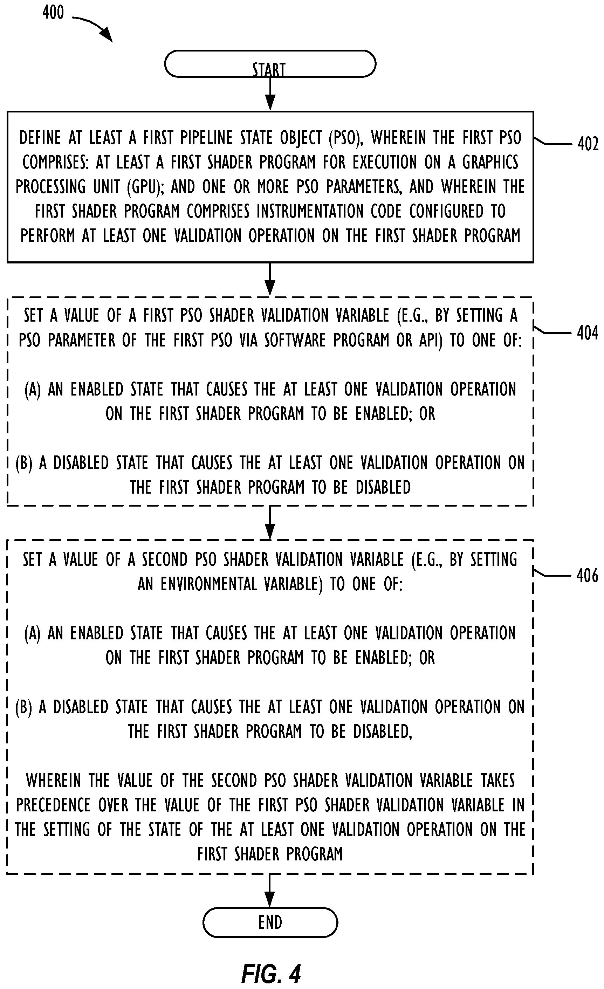

FIG. 4 depicts a flowchart illustrating a graphics processing operation 400 for implementing per-PSO shader validation. In one implementation, operation 400 may be implemented by processor resource 110 shown in FIGS. 1 and 2. For example, blocks within operation 400 could be implemented by the user space driver 102 and/or kernel driver 103 shown in FIG. 1. The use and discussion of FIG. 4 is only an example to facilitate explanation and is not intended to limit the disclosure to this specific example.

As an example, in some implementations, blocks 404 and/or 406 may be optional, such that operation 400 may not necessarily perform block 404 and/or block 406 each time operation 400 defines a PSO for which shader validation may optionally be enabled. For example, in some implementations, only PSO parameters may be used to turn on or off shader validation, while, in other implementations, only EVs may be used to turn on or off shader validation, while, in still other implementations, various combinations of PSO parameters and set EVs may be used to turn on or off shader validation for particular PSOs, e.g., according to a set of predefined logic rules, such as those described above with reference to the example of FIG. 3.

Returning to FIG. 4, operation 400 may start at block 402 and define at least a first pipeline state object (PSO), wherein the first PSO comprises: at least a first shader program for execution on a graphics processing unit (GPU); and one or more PSO parameters, and wherein the first shader program comprises instrumentation code configured to perform at least one validation operation on the first shader program.

Operation 400 then moves to block 404, where it may set a value of a first PSO shader validation variable (e.g., by setting a PSO parameter of the first PSO via software program or API) to one of: (a) an enabled state that causes the at least one validation operation on the first shader program to be enabled; or (b) a disabled state that causes the at least one validation operation on the first shader program to be disabled. According to some implementations, causing the at least one validation operation on the first shader program to be disabled may comprise compiling (or recompiling) the shader program(s) for the first PSO without instrumentation code in them. According to other implementations, causing the at least one validation operation on the first shader program to be disabled may instead comprise implementing or including a condition around the instrumentation code in the shader program(s) for the first PSO to simply cause the instrumentation code to not be executed (i.e., rather than removing the instrumentation code altogether) for as long as the first PSO shader validation variable is set in the disabled state. Either of the exemplary approaches to disabling the performance of the validation operation on the first shader program described above are possible, and may come with their own advantages and disadvantages, e.g., based on the needs of a given implementation.

Operation 400 then moves to block 406, where it may optionally set a value of a second PSO shader validation variable (e.g., by setting an environmental variable) to one of: (a) an enabled state that causes the at least one validation operation on the first shader program to be enabled; or (b) a disabled state that causes the at least one validation operation on the first shader program to be disabled.

As mentioned above, in some implementations, the operation 400 may be configured such that the value of the second PSO shader validation variable takes precedence over the value of the first PSO shader validation variable in the setting of the state of the at least one validation operation on the first shader program. In some implementations, the first and/or second PSO shader validation variable may also be assigned a default value (e.g., enabled or disabled), such that a programmer or developer would have to expressly indicate a desire to modify the PSO shader validation variable from its default value during a particular time interval(s); otherwise, the assigned default value for the state of shader validation would be applied to the respective PSO.

### Illustrative Hardware and Software

The disclosure may have implication and use in and with respect to variety of electronic devices, including single-and multi-processor computing systems, and vertical devices *(e.g.,* cameras, gaming systems, appliances, *etc.)* that incorporate single- or multi-processing computing systems. The discussion herein is made with reference to a common computing configuration for many different electronic computing devices (e.g., computer, laptop, mobile devices, etc.). This common computing configuration may have a CPU resource including one or more microprocessors and a graphics processing resource including one or more GPUs. Other computing systems having other known or common hardware configurations (now or in the future) are fully contemplated and expected. While the focus of some of the implementations relate to mobile systems employing minimized GPUs, the hardware configuration may also be found, for example, in a server, a workstation, a laptop, a tablet, a desktop computer, a gaming platform (whether or not portable), a television, an entertainment system, a smart phone, a phone, or any other computing device, whether mobile or stationary, vertical, or general purpose.

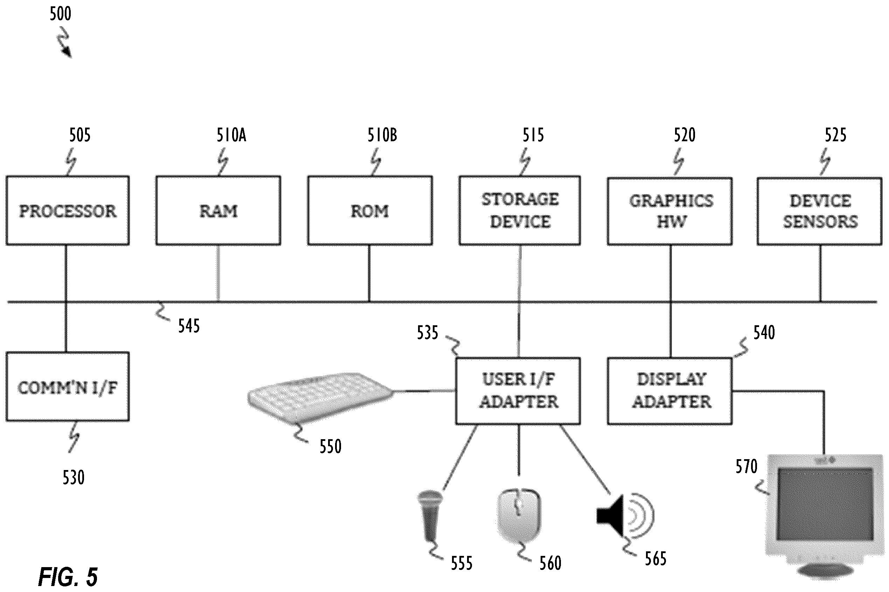

Referring to FIG. 5, the disclosed implementations may be performed by representative computing system 500. For example, the representative computer system may act as an end-user device or any other device that produces or displays graphics. For example, computing system 500 may be embodied in electronic devices, such as a general purpose computer system, a television, a set top box, a media player, a multi-media entertainment system, an image processing workstation, a hand-held device, or any device that may be coupled with or may incorporate display or presentation devices as discussed herein. Computing system 500 may include one or more processors 505, memory 510 (510A and 510B), one or more storage devices 515, and graphics hardware 520 (e.g., including one or more graphics processors). Computing system 500 may also have device sensors 525, which may include one or more of: depth sensors (such as a depth camera), 3D depth sensor(s), imaging devices (such as a fixed and/or video-capable image capture unit), RGB sensors, proximity sensors, ambient light sensors, accelerometers, gyroscopes, any type of still or video camera, LIDAR devices, SONAR devices, microphones, CCDs (or other image sensors), infrared sensors, thermometers, etc. These and other sensors may work in combination with one or more GPUs, DSPs or conventional microprocessors along with appropriate programming so the sensor outputs may be properly interpreted and/or combined and interpreted.

Returning to FIG. 5, system 500 may also include communication interface 530, user interface adapter 535, and display adapter 540 - all of which may be coupled via system bus, backplane, fabric or network 545. Memory 510 may include one or more different types of non-transitory media *(e.g.,* solid-state, DRAM, optical, magnetic, *etc.)* used by processor 505 and graphics hardware 520. For example, memory 510 may include memory cache, read-only memory (ROM), and/or random access memory (RAM). Storage 515 may include one or more non-transitory storage media including, for example, magnetic disks (fixed, floppy, and removable) and tape, optical media such as CD-ROMs and digital video disks (DVDs), and semiconductor memory devices such as Electrically Programmable Read-Only Memory (EPROM), solid state storage drives, and Electrically Erasable Programmable Read-Only Memory (EEPROM). Memory 510 and storage 515 may be used to retain media data (e.g., audio, image, and video files), preference information, device profile information, computer program instructions organized into one or more modules and written in any desired computer programming language, and any other suitable data. When executed by processor 505 and/or graphics hardware 520, such computer program code may implement one or more of operations or processes described herein. In addition, the system may employ microcontrollers (not shown), which may also execute such computer program code to implement one or more of the operations or computer readable media claims illustrated herein. In some implementations, the microcontroller(s) may operate as a companion to a graphics processor or a general-purpose processor resource.

Communication interface 530 may include semiconductor-based circuits and may be used to connect computing system 500 to one or more networks. Illustrative networks include, but are not limited to: a local network, such as a USB network; a business's local area network; and a wide area network such as the Internet and may use any suitable technology (e.g., wired or wireless). Communications technologies that may be implemented include cell-based communications *(e.g.,* LTE, CDMA, GSM, HSDPA, *etc.)* or other communications (Apple lightning, Ethernet, WiFi^{®}, Bluetooth^{®}, USB, Thunderbolt^{®}, Firewire^{®}, *etc.*)*.* (WIFI is a registered trademark of the Wi-Fi Alliance Corporation. BLUETOOTH is a registered trademark of Bluetooth Sig, Inc. THUNDERBOLT and FIREWIRE are registered trademarks of Apple Inc.). User interface adapter 535 may be used to connect keyboard 550, microphone 555, pointer device 560, speaker 565, and other user interface devices such as a touchpad and/or a touch screen (not shown). Display adapter 540 may be used to connect one or more displays 570.

Processor 505 may execute instructions necessary to carry out or control the operation of many functions performed by computing system 500 (e.g., evaluation, transformation, mathematical computation, or compilation of graphics programs, etc.). Processor 505 may, for instance, drive display 570 and receive user input from user interface adapter 535 or any other user interfaces embodied by a system. User interface adapter 535, for example, can take a variety of forms, such as a button, a keypad, a touchpad, a mouse, a dial, a click wheel, a keyboard, a display screen, and/or a touch screen. In addition, processor 505 may be based on reduced instruction-set computer (RISC) or complex instruction-set computer (CISC) architectures or any other suitable architecture and may include one or more processing cores. Graphics hardware 520 may be special purpose computational hardware for processing graphics and/or assisting processor 505 in performing computational tasks. In some implementations, graphics hardware 520 may include CPU-integrated graphics and/or one or more discrete programmable GPUs. Computing system 500 (implementing one or more implementations discussed herein) can allow for one or more users to control the same system *(e.g.,* computing system 500) or another system *(e.g.,* another computer or entertainment system) through user activity, which may include audio instructions, natural activity, and/or pre-determined gestures such as hand gestures.

Various implementations within the disclosure may employ sensors, such as cameras. Cameras and like sensor systems may include auto-focus systems to accurately capture video or image data ultimately used in a variety of applications, such as photo applications, augmented reality applications, virtual reality applications, and gaming. Processing images and performing recognition on the images received through camera sensors (or otherwise) may be performed locally on the host device or in combination with network accessible resources (e.g., cloud servers accessed over the Internet).

Returning to FIG. 5, device sensors 525 may capture contextual and/or environmental phenomena such as time; location information; the status of the device with respect to light, gravity, and the magnetic north; and even still and video images. In addition, network-accessible information such as weather information may also be used as part of the context. All captured contextual and environmental phenomena may be used to provide context to user activity or information about user activity. For example, in accessing a gesture or the expression or emotion of a user, the contextual information may be used as part of the analysis, and the analysis may be performed using the techniques discussed herein.

Output from the device sensors 525 may be processed, at least in part, by processors 505 and/or graphics hardware 520, and/or a dedicated image processing unit incorporated within or without computing system 500. Information so captured may be stored in memory 510 and/or storage 515 and/or any storage accessible on an attached network. Memory 510 may include one or more different types of media used by processor 505, graphics hardware 520, and device sensors 525 to perform device functions. Storage 515 may store data such as media (e.g., audio, image, and video files); metadata for media; computer program instructions; graphics programming instructions and graphics resources; and other software, including database applications (e.g., a database storing avatar frames), preference information, device profile information, and any other suitable data. Memory 510 and storage 515 may be used to retain computer program instructions or code organized into one or more modules in either compiled form or written in any desired computer programming language. When executed by, for example, a microcontroller, GPU or processor 505, such computer program code may implement one or more of the acts or functions described herein (e.g., interpreting and responding to user activity including commands and/or gestures).

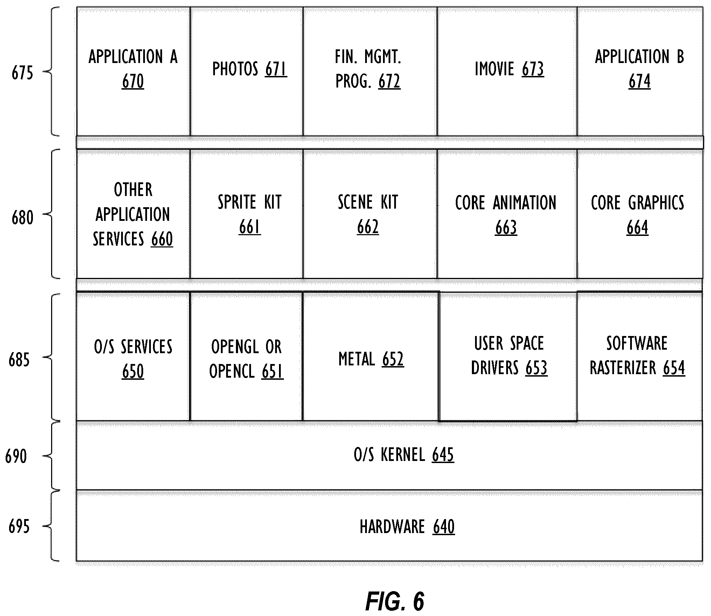

As noted above, implementations within this disclosure include software. As such, a description of common computing software architecture is provided as expressed in a layer diagram in FIG. 6. Like the hardware examples, the software architecture discussed here is not intended to be exclusive in any way, but rather to be illustrative. This is especially true for layer-type diagrams, which software developers tend to express in somewhat differing ways. In this case, the description begins with layers starting with the base hardware layer 695 illustrating hardware layer 640, which may include memory, general purpose processors, graphics processors, microcontrollers, or other processing and/or computer hardware such as memory controllers and specialized hardware. Above the hardware layer is the operating system kernel layer 690 showing an example as operating system kernel 645, which is kernel software that may perform memory management, device management, and system calls. The operating system kernel layer 690 is the typical location of hardware drivers, such as graphics processor drivers. The notation employed here is generally intended to imply that software elements shown in a layer use resources from the layers below and provide services to layers above. However, in practice, all components of a particular software element may not behave entirely in that manner.

Returning to FIG. 6, operating system services layer 685 is exemplified by operating system services 650. Operating system services 650 may provide core operating system functions in a protected environment. In addition, operating system services shown in operating system services layer 685 may include frameworks for OpenGL^{®}/OpenCL^{®} 651, CUDA^{®} or the like, Metal^{®} 652, user space drivers 653, and a Software Rasterizer 654. (OPENGL is a registered trademark of HEWLETT PACKARD ENTERPRISE DEVELOPMENT LP. OPENCL is a registered trademark of Apple Inc. CUDA is a registered trademark of NVIDIA Corporation.) While most of these examples all relate to graphics processor processing or graphics and/or graphics libraries, other types of services are contemplated by varying implementations of the disclosure. These particular examples also represent graphics frameworks/libraries that may operate in the lower tier of frameworks, such that developers may use shading and primitives and/or obtain fairly tightly coupled control over the graphics hardware. In addition, the particular examples named in FIG. 6 may also pass their work product on to hardware or hardware drivers, such as the graphics processor driver, for display-related material or compute operations.

Referring again to FIG. 6, OpenGL^{®}/OpenCL^{®} 651 represent examples of well-known libraries and application programming interfaces for graphics processor compute operations and graphics rendering including 2D and 3D graphics. Metal^{®} 652 also represents a published graphics library and framework, but it is generally considered lower level than OpenGL/OpenCL 651, supporting fine-grained, low-level control of the organization, processing, and submission of graphics and computation commands, as well as the management of associated data and resources for those commands. User space drivers 653 is software relating to the control of hardware that exists in the user space for reasons that are typically related to the particular device or function. In many implementations, user space drivers 653 work cooperatively with kernel drivers and/or firmware to perform the overall function of a hardware driver. Software Rasterizer 654 refers generally to software used to make graphics information such as pixels without specialized graphics hardware (e.g., using only the CPU). These libraries or frameworks shown within the operating system services layer 685 are only exemplary and intended to show the general level of the layer and how it relates to other software in a sample arrangement (e.g., kernel operations usually below and higher-level applications services 660 usually above). In addition, it may be useful to note that Metal^{®} 652 represents a published framework/library of Apple Inc. that is known to developers in the art. Furthermore, OpenGL^{®}/OpenCL^{®} 651 may represent frameworks/libraries present in current versions of software distributed by Apple Inc.

Above the operating system services layer 685 there is an application services layer 680, which includes Sprite Kit 661, Scene Kit 662, Core Animation 663, Core Graphics 664, and other applications services 660. The operating system services layer 685 represents higher-level frameworks that are commonly directly accessed by application programs. In some implementations of this disclosure the operating system services layer 685 includes graphics-related frameworks that are high level in that they are agnostic to the underlying graphics libraries (such as those discussed with respect to operating system services layer 685). In such implementations, these higher-level graphics frameworks are meant to provide developer access to graphics functionality in a more user/developer friendly way and allow developers to avoid work with shading and primitives. By way of example, Sprite Kit 661 is a graphics rendering and animation infrastructure made available by Apple Inc. Sprite Kit 661 may be used to animate textured images or "sprites." Scene Kit 662 is a 3D-rendering framework from Apple Inc. that supports the import, manipulation, and rendering of 3D assets at a higher level than frameworks having similar capabilities, such as OpenGL. Core Animation 663 is a graphics rendering and animation infrastructure made available from Apple Inc. Core Animation 663 may be used to animate views and other visual elements of an application. Core Graphics 664 is a two-dimensional drawing engine from Apple Inc., which provides 2D rendering for applications.

Above the application services layer 680, there is the application layer 675, which may comprise any type of application program. By way of example, FIG. 6 shows three specific applications: photos 671 (a photo management, editing, and sharing program), a financial management program 672, and iMovie^{®} 673 (a movie making and sharing program). (IMOVIE is a registered trademark of Apple Inc.). Application layer 675 also shows two generic applications 670 and 674, which represent the presence of any other applications that may interact with or be part of the inventive implementations disclosed herein. Generally, some implementations of the disclosure employ and/or interact with applications that produce displayable and/or viewable content or produce computational operations that are suited for GPU processing.

In evaluating operating system services layer 685 and applications services layer 680, it may be useful to realize that different frameworks have higher- or lower-level application program interfaces, even if the frameworks are represented in the same layer of the FIG. 6 diagram. The illustration of FIG. 6 serves to provide a general guideline and to introduce exemplary frameworks that may be discussed later. Furthermore, some implementations of the disclosure may imply that frameworks in application services layer 680 make use of the libraries represented in operating system services layer 685. Thus, FIG. 6 provides intellectual reinforcement for these examples. Importantly, FIG. 6 is not intended to limit the types of frameworks or libraries that may be used in any particular way or in any particular implementation. Generally, many implementations of this disclosure relate to the ability of applications in layer 675 or frameworks in layers 680 or 685 to divide long continuous graphics processor tasks into smaller pieces. In addition, many implementations of the disclosure relate to graphics processor (e.g., GPU) driver software in operating system kernel layer 690 and/or embodied as microcontroller firmware in hardware layer 695; such drivers performing a scheduling function for the graphics processor resource (e.g., GPU).

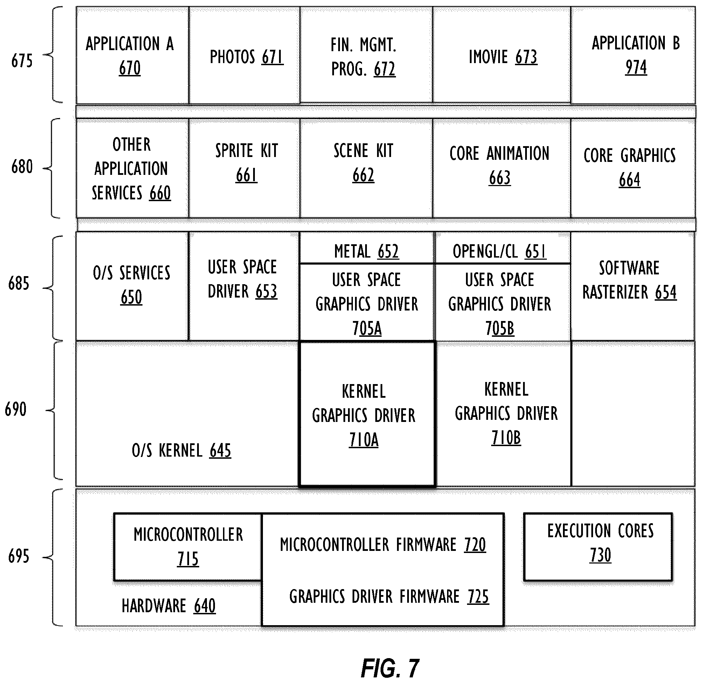

FIG. 7 illustrates a software architecture similar to the standard architecture shown in FIG. 6. By way of distinction, the architecture of FIG. 7 shows: user space graphics drivers 705A and 705B; kernel graphics drivers 710A and 710B in the operating system kernel 645; a microcontroller 715, accompanied by microcontroller firmware 720, including graphics driver firmware 725 in the hardware layer 640; and execution cores 730 in the hardware layer 640. The presence of multiple instances of a graphics driver (user space graphics drivers 705A and 705B, kernel graphics drivers 710A and 710B, and graphics driver firmware 725 in the microcontroller firmware 720) indicates the various options for implementing the graphics driver. As a matter of technical possibility, any of the three shown drivers might independently operate as a sole graphics driver. In some implementations of the disclosure, the overall graphics driver is implemented in a combination of kernel graphics drivers 710A and 710B and graphics driver firmware 725 *(e.g.,* in the operating system kernel 645 and the microcontroller firmware 720, respectively). In other implementations, the overall graphics driver may be implemented by the combined effort of all three shown drivers 705A and 705B, 710A and 710B, and 725.

At least one implementation is disclosed and variations, combinations, and/or modifications of the implementation(s) and/or features of the implementation(s) made by a person having ordinary skill in the art are within the scope of the disclosure. Alternative implementations that result from combining, integrating, and/or omitting features of the implementation(s) are also within the scope of the disclosure. Where numerical ranges or limitations are expressly stated, such express ranges or limitations may be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). The use of the term "about" means ±10% of the subsequent number, unless otherwise stated.

Many other implementations will be apparent to those of skill in the art upon reviewing the above description. The scope of the invention therefore should be determined with reference to the appended claims, along with the full scope of equivalents to which such claims are entitled. In the appended claims, the terms "including" and "in which" are used as the plain-English equivalents of the respective terms "comprising" and "wherein."

Exemplary non-transitory program storage devices, systems, and methods are set out in the following items.
1. A non-transitory program storage device, readable by at least one processor and comprising instructions stored thereon to cause the at least one processor to:
   define at least a first pipeline state object (PSO), wherein the first PSO comprises:
      at least a first shader program for execution on a graphics processing unit (GPU); and
      one or more PSO parameters, and
   wherein the first shader program comprises instrumentation code configured to perform at least one validation operation on the first shader program; and
   set a value of a first PSO shader validation variable to one of:
      an enabled state that causes the at least one validation operation on the first shader program to be enabled; or
      a disabled state that causes the at least one validation operation on the first shader program to be disabled.
2. The non-transitory program storage device of item 1, wherein the first PSO shader validation variable comprises a first PSO parameter of the one or more PSO parameters.
3. The non-transitory program storage device of item 2, wherein the value of the first PSO shader validation variable is set via one of the following methods: (a) a software program; or (b) an Application Programming Interface (API).
4. The non-transitory program storage device of item 1, wherein the first PSO shader validation variable comprises an environmental variable (EV).
5. The non-transitory program storage device of item 1, wherein the instructions stored thereon further cause the at least one processor to:
   set a value of a second PSO shader validation variable to one of:
   an enabled state that causes the at least one validation operation on the first shader program to be enabled; or
   a disabled state that causes the at least one validation operation on the first shader program to be disabled.
6. The non-transitory program storage device of item 5, wherein the second PSO shader validation variable comprises an environmental variable.
7. The non-transitory program storage device of item 6, wherein the first PSO shader validation variable comprises a first PSO parameter of the one or more PSO parameters, and wherein the value of the second PSO shader validation variable takes precedence over the value of the first PSO shader validation variable in setting the state of the at least one validation operation on the first shader program.
8. The non-transitory program storage device of item 6, wherein setting the value of the second PSO shader validation variable does not require a recompilation of an application executing the first shader program.
9. The non-transitory program storage device of item 1, wherein a default value of the first PSO shader validation variable is the enabled state.
10. The non-transitory program storage device of item 1, wherein a default value of the first PSO shader validation variable is the disabled state.
11. The non-transitory program storage device of item 1, wherein the first PSO further comprises:
   a second shader program for execution on the GPU,
   wherein the second shader program comprises instrumentation code configured to perform at least one validation operation on the second shader program,
   wherein setting the value of a first PSO shader validation variable to the enabled state further causes the at least one validation operation on the second shader program to be enabled, and
   wherein setting the value of a first PSO shader validation variable to the disabled state that causes the at least one validation operation on the second shader program to be disabled.
12. The non-transitory program storage device of item 1, wherein the instrumentation code configured to perform at least one validation operation on the first shader program further comprises code configured to:
   (a) perform an out of bounds memory access check;
   (b) perform an incorrect textures type check;
   (c) check for a stack overflow error;
   (d) perform resource usage checks;
   (e) perform acceleration structure type checks; or
   (f) perform residency checks.
13. A system comprising:
   a display;
   a graphics processing unit (GPU);
   memory; and
   at least one processor operable to interact with the memory, and configured to execute instructions to:
      define at least a first pipeline state object (PSO), wherein the first PSO comprises:
         at least a first shader program for execution on the GPU; and
         one or more PSO parameters, and
      wherein the first shader program comprises instrumentation code configured to perform at least one validation operation on the first shader program; and
      set a value of a first PSO shader validation variable to one of:
         an enabled state that causes the at least one validation operation on the first shader program to be enabled; or
         a disabled state that causes the at least one validation operation on the first shader program to be disabled.
14. The system of item 13, wherein the first PSO shader validation variable comprises a first PSO parameter of the one or more PSO parameters, and wherein the value of the first PSO shader validation variable is set via one of the following methods: (a) a software program; or (b) an Application Programming Interface (API).
15. The system of item 13, wherein the first PSO shader validation variable comprises an environmental variable.
16. The system of item 14, wherein the instructions further cause the at least one processor to:
   set a value of a second PSO shader validation variable to one of:
   an enabled state that causes the at least one validation operation on the first shader program to be enabled; or
   a disabled state that causes the at least one validation operation on the first shader program to be disabled.
17. The system of item 16, wherein the second PSO shader validation variable comprises an environmental variable, and wherein the value of the second PSO shader validation variable takes precedence over the value of the first PSO shader validation variable in setting the state of the at least one validation operation on the first shader program.
18. A graphical processing method, wherein at least one processor performs operations comprising:
   defining at least a first pipeline state object (PSO), wherein the first PSO comprises:
      at least a first shader program for execution on a graphical processing unit (GPU); and
      one or more PSO parameters, and
   wherein the first shader program comprises instrumentation code configured to perform at least one validation operation on the first shader program; and
   setting a value of a first PSO shader validation variable to one of:
      an enabled state that causes the at least one validation operation on the first shader program to be enabled; or
      a disabled state that causes the at least one validation operation on the first shader program to be disabled.
19. The method of item 18, wherein the first PSO shader validation variable comprises a first PSO parameter of the one or more PSO parameters, and wherein the value of the first PSO shader validation variable is set via one of the following methods: (a) a software program; or (b) an Application Programming Interface (API).
20. The method of item 19, further comprising:
   setting a value of a second PSO shader validation variable to one of:
      an enabled state that causes the at least one validation operation on the first shader program to be enabled; or
      a disabled state that causes the at least one validation operation on the first shader program to be disabled,
   wherein the value of the second PSO shader validation variable takes precedence over the value of the first PSO shader validation variable in setting the state of the at least one validation operation on the first shader program.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A non-transitory program storage device, readable by at least one processor and comprising instructions stored thereon to cause the at least one processor to:
define at least a first pipeline state object (PSO), wherein the first PSO comprises:
at least a first shader program for execution on a graphics processing unit (GPU); and
one or more PSO parameters, and
wherein the first shader program comprises instrumentation code configured to perform at least one validation operation on the first shader program; and
set a value of a first PSO shader validation variable to one of:
an enabled state that causes the at least one validation operation on the first shader program to be enabled; or
a disabled state that causes the at least one validation operation on the first shader program to be disabled.

2. The non-transitory program storage device of claim 1, wherein the first PSO shader validation variable comprises a first PSO parameter of the one or more PSO parameters.

3. The non-transitory program storage device of claim 2, wherein the value of the first PSO shader validation variable is set via one of the following methods: (a) a software program; or (b) an Application Programming Interface (API).

4. The non-transitory program storage device of claim 1, wherein the first PSO shader validation variable comprises an environmental variable (EV).

5. The non-transitory program storage device of claim 1, wherein the instructions stored thereon further cause the at least one processor to:
set a value of a second PSO shader validation variable to one of:
an enabled state that causes the at least one validation operation on the first shader program to be enabled; or
a disabled state that causes the at least one validation operation on the first shader program to be disabled.

6. The non-transitory program storage device of claim 5, wherein the second PSO shader validation variable comprises an environmental variable.

7. The non-transitory program storage device of claim 6, wherein the first PSO shader validation variable comprises a first PSO parameter of the one or more PSO parameters, and wherein the value of the second PSO shader validation variable takes precedence over the value of the first PSO shader validation variable in setting the state of the at least one validation operation on the first shader program.

8. The non-transitory program storage device of claim 6, wherein setting the value of the second PSO shader validation variable does not require a recompilation of an application executing the first shader program.

9. The non-transitory program storage device of claim 1, wherein the first PSO further comprises:
a second shader program for execution on the GPU,
wherein the second shader program comprises instrumentation code configured to perform at least one validation operation on the second shader program,
wherein setting the value of a first PSO shader validation variable to the enabled state further causes the at least one validation operation on the second shader program to be enabled, and
wherein setting the value of a first PSO shader validation variable to the disabled state that causes the at least one validation operation on the second shader program to be disabled.

10. The non-transitory program storage device of claim 1, wherein the instrumentation code configured to perform at least one validation operation on the first shader program further comprises code configured to:
(a) perform an out of bounds memory access check;
(b) perform an incorrect textures type check;
(c) check for a stack overflow error;
(d) perform resource usage checks;
(e) perform acceleration structure type checks; or
(f) perform residency checks.

11. A system comprising:
a display;
a graphics processing unit (GPU);
memory; and
at least one processor operable to interact with the memory, and configured to execute instructions to:
define at least a first pipeline state object (PSO), wherein the first PSO comprises:
at least a first shader program for execution on the GPU; and
one or more PSO parameters, and
wherein the first shader program comprises instrumentation code configured to perform at least one validation operation on the first shader program; and
set a value of a first PSO shader validation variable to one of:
an enabled state that causes the at least one validation operation on the first shader program to be enabled; or
a disabled state that causes the at least one validation operation on the first shader program to be disabled.

12. The system of claim 11, wherein the instructions further cause the at least one processor to:
set a value of a second PSO shader validation variable to one of:
an enabled state that causes the at least one validation operation on the first shader program to be enabled; or
a disabled state that causes the at least one validation operation on the first shader program to be disabled.

13. A graphical processing method, wherein at least one processor performs operations comprising:
defining at least a first pipeline state object (PSO), wherein the first PSO comprises:
at least a first shader program for execution on a graphical processing unit (GPU); and
one or more PSO parameters, and
wherein the first shader program comprises instrumentation code configured to perform at least one validation operation on the first shader program; and
setting a value of a first PSO shader validation variable to one of:
an enabled state that causes the at least one validation operation on the first shader program to be enabled; or
a disabled state that causes the at least one validation operation on the first shader program to be disabled.

14. The method of claim 13, wherein the first PSO shader validation variable comprises a first PSO parameter of the one or more PSO parameters, and wherein the value of the first PSO shader validation variable is set via one of the following methods: (a) a software program; or (b) an Application Programming Interface (API).

15. The method of claim 14, further comprising:
setting a value of a second PSO shader validation variable to one of:
an enabled state that causes the at least one validation operation on the first shader program to be enabled; or
a disabled state that causes the at least one validation operation on the first shader program to be disabled,
wherein the value of the second PSO shader validation variable takes precedence over the value of the first PSO shader validation variable in setting the state of the at least one validation operation on the first shader program.
